# EUROPEAN PATENT SPECIFICATION

(11) **EP 0 463 738 B1**
(45) Date of publication and mention of the grant of the patent: **21.08.1996**
(21) Application number: 91304846.8
(22) Date of filing: 29.05.1991
(51) Int. Cl.: C08L 81/00, C08L 77/00, C08L 67/02

(54) **Resin composition**
Harzmasse
Composition de résine

(30) Priority: 29.05.1990 JP 139228/90; 01.06.1990 JP 145108/90; 01.06.1990 JP 145109/90
(43) Date of publication of application: 02.01.1992
(73) Proprietor: TORAY INDUSTRIES, INC., Tokyo (JP)
(72) Inventor: Atsushi, Ishio, Nagoya-shi, Aichi-ken (JP); Kazuhiko, Kobayashi, Tokoname-shi, Aichi-ken (JP)
(74) Representative: Coleiro, Raymond

(56) References cited:
- CHEMICAL ABSTRACTS, vol. 113, no. 22, November 26, 1990, Columbus, Ohio, USA Y. UNO et al. "Impact-resistant poly(phenylene sulfide) resin compositions" page 80, column 1, abstract-no. 193 016t
- CHEMICAL ABSTRACTS, vol. 110, no. 22, May 29, 1989, Columbus, Ohio, USA Y. KISHIDA et al. "Heat-resistant thermoplastic resin compositions with good moldability" page 47, column 2, abstract-no. 194 057g
- CHEMICAL ABSTRACTS, vol. 102, no. 2, January 14, 1985, Columbus, Ohio, USA DAINIPPON INK AND CHEMICALS, INC. "Poly(phenylene sulfide) resin compositions" page 42, column 2, abstract-no. 7 661z
- CHEMICAL ABSTRACTS, vol. 101, no. 8, August 20, 1984, Columbus, Ohio, USA TORAY INDUSTRIES, INC. "Abrasion-resistant resin compositions" page 36, column 1, abstract-no. 56 035m

## Description

This invention relates to a resin composition giving a shaped article having satisfactory properties such as good mechanical strengths, thermal resistance, dimensional stability and chemical resistance. More particularly, it relates to a thermoplastic resin composition comprising a poly(arylene sulfide sulfone) resin (hereinafter referred to as "PASS" for brevity) which is non-crystalline or of low crystallinity and a crystalline polyamide resin and/or a crystalline semi-aromatic polyester resin.

Polyamide resins represented by nylon 6 and nylon 66 and semi-aromatic polyester resins represented by polybutylene terephthalate have high mechanical strengths and good electrical properties and shapability and, therefore, are widely used as engineering plastics for electrical and electronic parts, automobile parts, and general machine parts. Although these polyamide resins and semi-aromatic polyester resins are crystalline and hence exhibit a good shapability, these resins exhibit a large dimensional change due to crystallization shrinkage, and therefore, their use is limited especially in fields where a high dimensional accuracy is required. Furthermore, polyamide resins are liable to absorb moisture in the air and therefore undesirable dimensional change and rigidity reduction occur. Semi-aromatic polyester resins are subject to hydrolysis under high-temperature and high-humidity environmental conditions and therefore the mechanical strengths are reduced.

PASS resins represented by a poly(phenylene sulfide sulfone) resin, which is described in US-A-4125525 and US-A-4102875, are non crystalline or of low crystallinity, have a high glass transition temperature and exhibit a good thermal resistance, dimensional stability moisture resistance and fire retardance. Nevertheless, these PASS resins have a high glass transition temperature and hence a poor shapability, and exhibit a poor resistance to halogen-containing organic solvents such as chloroform and trichloroethylene, and therefore their use is limited.

The present invention provides a thermoplastic resin composition having a satisfactory shapability and which can be moulded into articles having satisfactory strength, thermal resistance, dimensional stability and chemical resistance.

In general, a thermoplastic resin composition of the present invention may be a polymer alloy wherein a generally crystalline thermoplastic resin is combined with a generally non-crystalline thermoplastic resin. It is obtained by blending a PASS resin with a polyamide resin and/or a semi-aromatic polyester resin, and may have a high impact resistance as well as the above-mentioned satisfactory properties.

In accordance with the present invention, there is provided a resin composition comprising 5 to 95% by weight of a poly(arylene sulfide sulfone) resin (PASS resin), which is represented by a poly(phenylene sulfide sulfone) resin, and 95 to 5% by weight of at least one crystalline thermoplastic resin selected from polyamide resins and semi-aromatic polyester resins, the amounts being based on the total weight of the PASS resin and the thermoplastic resin.

The resin composition of the present invention optionally contains a reinforcing material and/or, as an impact modifier, a thermoplastic elastomer such as a modified polyolefin elastomer, a diene block copolymer or a hydrogenated product derived therefrom.

The poly(arylene sulfide sulphone) resin (PASS resin) used in the present invention is preferably a polymer comprising recurring structural units, which may form a predominant part of the polymer, represented by the following formula (II):

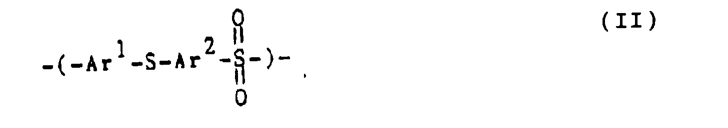

In the formula (II), Ar¹ and Ar² independently represent divalent aromatic hydrocarbon groups which include, for example, a p-phenylene group, m-phenylene group, o-phenylene group, a methyl-substituted phenylene group, an ethyl-substituted phenylene group, a dimethyl-substituted phenylene group, a trimethyl-substituted phenylene group, a tetramethyl-substituted phenylene group, a naphthylene group and alkyl-substituted naphthylene groups. Preferable divalent aromatic hydrocarbon groups are those which give substantially non-crystalline PASS resins exhibiting a heat of crystalline fusion not larger than 2 cal/g as measured at a temperature elevation rate of 20°C/min by using a differential scanning calorimeter. More preferably, Ar¹ and Ar² are selected from a p-phenylene group, a m-phenylene group and a naphthylene group. Most preferably, Ar¹ and Ar² are each a p-phenylene group.

The above-mentioned PASS resins used in the present invention can be prepared, for example, by the processes described in US-A-4125525 and US-A-4102875.

The PASS resins used in the present invention may be copolymers which have, in addition to the recurring structural units of formula (1), recurring structural units represented by at least one of the following formulae; 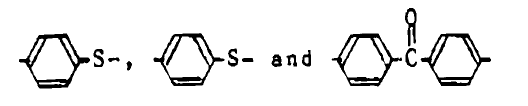 in an amount such that the thermal resistance, fire retardance and other good properties inherent to PASS resins are not banefully influenced.

The polymerization degree of the PASS resins is not particularly limited, and the PASS resins are preferably such that the melt flow rate is from 0.5 to 1,000 g/10 min, more preferably from 1 to 800 g/10 min, as measured according to ASTM D1238-86 at a temperature of 340°C under a load of 5,000 g.

The polyamide resins used in the present invention are predominantly comprised of recurring structural units which may be derived from amino acids, lactams, or diamines and dicarboxylic acids. As the monomers used for the preparation of the polyamide resins, there can be mentioned amino acids such as 6-amino caproic acid, 11-amino undocanoic acid, 12-amino dodecanoic acid and p-aminomethyl benzoic acid; lactams such as ε-caprolactam and ω-laurolactam; aliphatic, alicyclic and aromatic diamines such as tetramethylenediamine, hexamethylenediamine, undecamethylenediamine, dodecamethylenediamine, 2,2,4- or 2,4,4-trimethylhexamethylenediamine, 5-methyl-nonamethylenediamine, m-xylylenediamine, p-xylylenediamine, 1,3-bis(aminomethyl)cyclohexane, 1,4-bis(aminomethyl)-cyclohexane, 1-amino-3-aminomethyl-3,5,5-trimethyl-cyclohexane, bis(4-aminocyclohexyl)methane, bis(3-methyl-4-aminocyclohexyl)methane, 2,2-bis(4-amino-cyclohexyl)-propane, bis(aminopropyl)piperazine and aminoethyl-piperazine; and dicarboxylic acids such as adipic acid, suberic acid, azelaic acid, sebacic acid, decane-dicarboxylic acid, terephthalic acid, isophthalic acid, 2-chloroterephthalic acid, 2-methylterephthalic acid, 5-methylisophthalic acid, 5-sodium-sulfoisophthalic acid, hexahydroterephthalic acid and hexahydroisophthalic acid, Aliphatic and semi-aromatic polyamides derived from these amino acids, lactams, or diamines and dicarboxylic acids may be either homopolymers or copolymers, and used either alone or in combination.

As typical examples of the polyamide resins, there can be mentioned polycapramide (nylon 6), polyhexamethylene adipamide (nylon 66), polytetramethylene adipamide (nylon 46), polyhexamethylene sebacamide (nylon 610), polyhexamethylene dodecamide (nylon 612), polyundecamethylene adipamide (nylon 116), polyundecanamide (nylon 11), polydodecanamide (nylon 12), a polycapramide/polyhexamethylene terephthalamide copolymer (nylon 6/6T) and a polyhexamethylene adipamide/polyhexamethylene terephthalamide copolymer (nylon 66/6T).

The polymerization degree of the polyamide resins is not particularly limited, and the polyamide resins preferably have a relative viscosity of from 1.5 to 5.0 as measured at 25°C on a 1% polymer solution in a conc.sulfuric acid.

The semi-aromatic polyester resins used in the present invention are preferably homopolymers and copolymers, which are obtained by a condensation reaction between an aliphatic or alicyclic diol component having 2 to 10 carbon atoms or a long chain glycol having a molecular weight of 400 to 6,000, and an aromatic dicarboxylic acid or an ester-forming derivative thereof. As the aliphatic or alicyclic diol component, there can be mentioned, for example, ethylene glycol, propylene glycol, 1,4-butanediol, neopentyl glycol, 1,5-pentanediol, 1,6-hexanediol, 2-ethylhexane-1,3-diol, cyclohexanediol, cyclohexanedimethanol and 2,2-bis(4-hydroxyphenyl)propane. As the long chain glycol, there can be mentioned, for example, polyethylene glycol, polypropylene glycol and polytetramethylene glycol. As the aromatic dicarboxylic acid, there can be mentioned, for example, terephthalic acid,-- isophthalic acid, orthophthalic acid, naphthalenedicarboxylic acid, bis-benzoic acid, bis(p-carboxyphenylmethane)-4,4-diphenyl-ether-dicarboxylic acid and 4,4'-diphenoxyethane-dicarboxylic acid. The semi-aromatic polyester resins may be used either alone or in combination.

The semi-aromatic polyester resins can contain units derived from an aliphatic carboxylic acid such as adipic acid, sebacic acid, azelaic acid or decane-dicarboxylic acid in an amount such that the intended properties of the semi-aromatic polyester are not banefully influenced.

As the semi-aromatic polyester resins valuably used in the present invention, there can be mentioned polyethylene terephthalate, polybutylene terephthalate and polycyclohexylenedimethylene terephthalate.

The polymerization degree of the semi-aromatic polyester used in the present invention is preferably such that the intrinsic viscosity as measured at 30°C in a phenol/tetrachloroethane mixed solvent (6/4 weight ratio) is at least 0.4

In the resin composition of the present invention the mixing ratio between the PASS resin and the crystalline thermoplastic (polyamide resin and/or the semi-aromatic polyester) resin is in the range of from 95/5 to 5/95 by weight, preferably from 90/10 to 10/90 by weight. Thus, the mixing ratio of PASS/crystalline thermoplastic resin may, for example, be from 85/15 to 15/85, or from 80/20 to 20/80, by weight. If this ratio exceeds 95% by weight, the melt flowability of the resin composition is reduced and the shapability is drastically degraded. On the other hand, if this ratio is lower than 5% by weight, the thermal resistance and dimensional stability of the resin composition are poor.

The resin composition of the present invention optionally additionally comprises a thermoplastic elastomer as an impact modifier. The thermoplastic elastomer may be a polyolefin elastomer, a modified polyolefin elastomer having in the molecule functional groups such as carboxylic acid groups, groups derived from carboxylic acid groups or epoxy groups, a diene elastomer, a hydrogenation product derived from a diene elastomer, an acrylic elastomer, a silicone elastomer, a fluorine-containing elastomer or a polysulfide elastomer.

Specific examples of the polyolefin elastomer are an ethylene/propylene copolymer, an ethylene/butene copolymer, polybutene and an ethylene/propylene/diene copolymer.

The modified polyolefin elastomer having carboxylic acid groups or groups derived from carboxylic acid groups in the molecule may be obtained by modifying a polyolefin prepared by radical polymerization of at least one olefin selected from ethylene, propylene, butene-1, pentene-1, 4-methyl-pentene-1, isobutylene, 1,4-hexadiene, dicyclopetadiene, 2,5-nobornadiene, 5-ethylidenenorbornene, 5-ethyl 2,5-norbornadiene, 5-(1'-propenyl)2-norbornene and styrene, with a monomer component having at least one functional group selected from a carboxylic acid group, a carboxylic acid ester group, a carboxylic acid metal salt group, a carboxylic acid anhydride group and an imide group.

As typical examples of the functional group-containing monomer component, there can be mentioned acrylic acid, methacrylic acid, maleic acid, fumaric acid, itaconic acid, crotonic acid, methylmaleic acid, methylfumaric acid, mesaconic acid, citraconic acid, glutaconic acid, metal salts of these carboxylic acids, methyl hydrogenmaleate, methyl hydrogenitaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-(2,2,1)-5-heptene-2,3-dicarboxylic acid, endobicyclo-(2,2,1)-5-heptene-2,3-dicarboxylic anhydride, maleimide, N-ethylmaleimide, N-butylmaleimide and N-phenylmaleimide.

The process for modifying a polyolefin with the above-mentioned functional group-containing monomer component is not particularly limited, but a process can be adopted in which the functional group-containing monomer component is copolymerized with a predominant amount of an olefin monomer or graft-copolymerized on a polyolefin by using a radical initiator. The amount of the functional group-having monomer component used for the modification is preferably from 0.001 to 40% by mole, more preferably from 0.01 to 35% by mole, based on the entire weight of the modified polyolefin.

As examples of the modified polyolefin valuably used in the present invention, there can be mentioned an ethylene/acrylic acid copolymer, an ethylene/methacrylic acid copolymer, products obtained by converting a part or all of the carboxylic acid portions in these copolymers to a salt with a metal such as sodium, lithium, potassium, zinc or calcium, an ethylene/methyl acrylate copolymer, an ethylene/ethyl acrylate copolymer, an ethylene/methyl methacrylate copolymer, an ethylene/ethyl methacrylate copolymer, an ethylene/ethyl acrylate-g-maleic anhydride copolymer ("g" means -grafted-; the same will apply hereinafter), an ethylene/methyl methacrylace-g-maleic anhydride copolymer, an ethylene/ethyl acrylate-g-maleimide copolymer, an ethylene/ethyl acrylate-g-N-phenylmaleimide copolymer, partially saponified products of these copolymers, an ethylene/propylene-g-maleic anhydride copolymer, an ethylene/butene 1-g-maleic anhydride copolymer, an ethylene/propylene/1,4-hexadiene-g-maleic anhydride copolymer, an ethylene/propylene/ dicyclopentadiene-g-maleic anhydride copolymer, an ethylene/ propylene/2,5-norbornadiene-g-maleic anhydride copolymer, an ethylene/propylene-g-N-phenylmaleimide copolymer and an ethylene/butene-1-g-N-phenylmaleimide copolymer.

The modified polyolefin elastomer having epoxy groups in the molecule is an olefin polymer having epoxy groups in the side chains or the main chain, and ordinary epoxy resins are not included. As the epoxy group-containing olefin polymer, there can be mentioned an olefin polymer having glycidyl groups such as glycidyl esters, glycidyl ethers or glycidylamines, and a product prepared by epoxidizing the double bonds of a double bond-containing olefin polymer. Of these epoxy group-modified polyolefins, a copolymer of an α-olefin with an α,β unsaturated acid glycidyl ester is preferably used in the present invention. As specific examples of the α-olefin referred to herein, there can be mentioned ethylene, propylene and butene-1. The α,β-unsaturated acid glycidyl ester is a compound represented by the following formula: 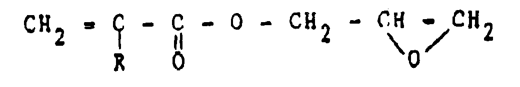 wherein R represents a hydrogen atom or a lower alkyl group.
As specific examples of the α,β-unsaturated acid glycidyl ester, there can be mentioned glycidyl acrylate, glycidyl methacrylate and glycidyl ethacrylate. In the epoxy group-containing olefin polymer, the content of the epoxy groups is preferably from 0.1 to 30% by weight and more preferably from 0.2 to 20% by weight. If the content of the epoxy group is lower than 0.1% by weight, the intended effects cannot be attained. If the content of the epoxy group is higher than 30% by weight, gelation occurs at the melt kneading with the other resin components, and the extrusion stability, shapability and mechanical properties are undesirably degraded.

The diene block copolymer elastomer of the A-B type or A-B-A′ type is a block copolymer elastomer of the A-B type or A-B-A′ type having vinyl aromatic hydrocarbon polymer blocks and conjugated diene polymer blocks. The terminal blocks A and A′ may be the same or different, and are composed of a thermoplastic homopolymer or copolymer derived from a vinyl aromatic hydrocarbon in which the aromatic ring portion may be either monocyclic or polycyclic. As examples of the vinyl aromatic hydrocarbon, there can be mentioned styrene, α-methylstyrene, vinyltoluene, vinylxylene, ethylvinylxylene, vinylnaphthalene and mixtures thereof. The intermediate polymer block B is composed of a conjugated diene type hydrocarbon. For example, polymers derived from 1,3-butadiene, 2,3-dimethylbutadiene, isoprene, 1,3-pentadiene and mixtures thereof can be mentioned.

The diene block copolymer used in the present invention includes a product obtained by hydrogenating the polymer block B of the above-mentioned A-B type or A-B-A' type block copolymer. Furthermore, the diene block copolymer includes a product obtained by introducing a component having a functional group such as the above-mentioned carboxylic acid derivative or an epoxy group into the above block copolymer or the hydrogenation product thereof by means such as graft polymerization or copolymerization.

The silicone elastomer may be a polysiloxane represented by the formula: 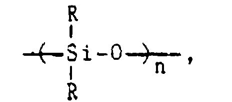 and as the group R, there can be mentioned a methyl group, an ethyl group, a propyl group, a phenyl group, a vinyl group, a fluoroalkyl group, and a group of the formula:

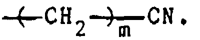

As the fluorine-containing elastomer, there can be mentioned, for example, a vinylidene fluoride/perfluoropropane copolymer, a vinylidene fluoride/trifluorochloroethylene copolymer, a tetrafluoroethylene/propylene copolymer, a tetrafluoroethylene/C₂F₃OCF₃ copolymer, fluorine-containing acrylate polymers such as a dihydroperfluorobutyl acrylate polymer and a trifluoromethoxydihydroperfluoroacrylate copolymer, a fluorosilicone elastomer such as 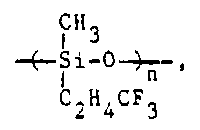 and a phosphazene elastomer such as

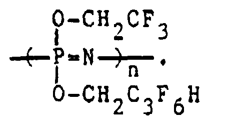

The polysulfide elastomer is a polymer represented by the formula: 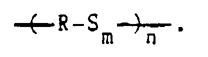 As examples of R, there can be mentioned -CH₂-, -C₂H₄-, -C₃H₆-, -C₄H₆-, -C₆H₁₂-, -C₁₀H₂₀-, 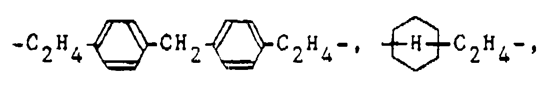 -C₂H₄OC₂H₄- -C₂H₄OCH₂OC₂H₄-, -C₂H₄OC₂H₄OC₂H₄ -, 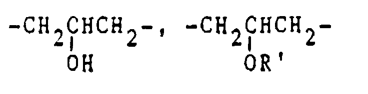 (in which R′ represents an alkyl group having 1 to 4 carbon atoms), and 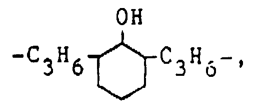 and m is an integer of from 1 to 4. These polysulfide elastomers may be used either alone or in combination.

Where the thermoplastic elastomer is incorporated as an impact modifier in the resin composition of the present invention, the amount of the thermoplastic elastomer is preferably from 5 to 100 parts by weight, more preferably 5 to 80 parts by weight, especially 10 to 70 parts by weight, per 100 parts by weight of the total of the PASS resin and the polyamide resin and/or the semi-aromatic polyester resin. If the amount of the thermoplastic elastomer is smaller than 5 parts by weight, the impact resistance of products moulded from the resin composition may be poor, and if the amount of the thermoplastic elastomer is larger than 100 parts by weight, the thermal resistance of products moulded from the resin composition may be poor.

The process for preparing the resin composition of the present invention is not particularly limited. For example, a process can be adopted in which the PASS resin is dry-blended together with the polyamide resin and/or the semi-aromatic polyester resin and the optional thermoplastic elastomer by a ribbon blender, a Henschel mixer or a V-blender, wherein all of the components may be in a powder, pellet or chip form. The dry polyblend is melt-kneaded by a Banbury mixer, a mixing roll, a single-screw or twin-screw extruder or a kneader. Of these melt-kneading means, a single-screw or twin-screw extruder having a high kneading force is typically adopted.

The order of kneading of the components is not particularly limited. For example, a mixture of the above-mentioned resins can be kneaded at a time. Alternatively, two components are mixed together in advance and the remaining component is mixed into the pre-formed mixture.

Ordinary additives such as an antioxidant, a heat stabilizer, a lubricant, a crystal nucleating agent, an ultraviolet absorber, a colorant and a flame retardant, and minor amounts of other polymers, can be incorporated in the resin composition of the present invention, as far as attainment of the intended effects of the present invention is not unduly hindered.

If desired, a fibrous and/or particulate reinforcing material can be incorporated in an amount of up to 400 parts by weight per 100 parts by weight of the entire resin composition of the present invention. In general, the incorporation of 10 to 300 parts by weight of the reinforcing material is sufficient for improving the mechanical strength, rigitity, thermal resistance and dimensional stability to a significant extent.

As the fibrous reinforcing material, there can be mentioned inorganic fibers such as glass fibers, alumina fibers, silicon carbide fibers, ceramic fibers, asbestos fibers, gypsum fibers, metal fibers, and carbon fibers.

As the particulate reinforcing material, there can be mentioned silicates such as wollastonite, cericite, kaolin, mica, clay, bentonite, asbestos, talc and alumina silicate, metal oxides such as alumina, magnesia, zirconia and titania, carbonates such as calcium carbonate, magnesium carbonate and dolomite, sulfates such as calcium sulfate and barium sulfate, and glass beads, boron nitride, silicon carbide and silica. The reinforcing material may be of a hollow form, and may be used either alone or in combination. The reinforcing material can be preliminarily treated with a silane or titanium coupling agent according to need.

The present invention will now be described in detail with reference to the following examples that by no means limit the scope of the invention.

The physical properties of resin compositions and mouldings prepared in the examples were determined as follows.
Tensile properties: ASTM D638
Flexural properties: ASTM D790
Izod impact strength: ASTM D256
Heat distortion temperature: ASTM D648 under a load of 18.6 kgf/cm²
Melt flow rate: ASTM D1238-86 at a temperature of 340°C under a load of 5,000 g

DSC characteristics: Using a DSC-2B type differential scanning calorimeter supplied by Perkin-Elmer Co., the measurement was made at a sample amount of 20 mg and a temperature elevation rate of 20°C/min. The point of inflection in the specific heat curve was identified as the glass transition temperature, and the heat absorption peak was identified as the melting point. Where the heat absorption peak did not occur, the resin was identified as non-crystalline.

### Referential Example 1

An autoclave was charged with 3,26 kg (25 moles) of sodium sulfide containing 40% of crystallization water, 10 g of sodium hydroxide, 7,9 kg of N-methyl-pyrrolidone (herein after referred to as "NMP") and 7,18 kg (25 moles) of p-dichlorodiphenylsulfone. The inside of the autoclave was purged with nitrogen gas and the content was maintained at 200°C under a high pressure for 5 hours while being stirred to effect reaction. The reaction product was washed with hot water at 90°C five times and dried at 80°C under a reduced pressure for 24 hours to yield 5.9 kg of non-crystalline poly(phenylene sulfide sulfone) resin hereinafter referrred to as "PASS-1") having a melt flow rate of 40 g/10 min and a glass transition temperature of 210°C.

### Referential Example 2

A poly(phenylene sulfide sulfone) resin was prepared in the same manner as described in Referential Example 1, wherein 10 kg of sulfolane was used instead of 10 kg of NMP with all other conditions remaining substantially the same. Thus, 5.5 kg of a poly(phenylene sulfide sulfone) resin (hereinafter referred to as "PASS-2") having a melt flow rate of 20g/ 10 min was obtained.

### Examples 1, 2 and 3

PASS-1 prepared in Referential Example 1 and nylon 66 having a relative viscosity of 2,8 were dry-blended in the proportion shown in Table 1. The polyblend was melt-kneaded by using a twin-screw extruder having a screw diameter of 30 mm and at a cylinder temperature of 300°C and a number of revolutions of 150 rpm to yield a gut, and the gut was cut into pellets. The pellets were vacuum dried at 100°C for 16 hours, and injection-molded using an in-line reciprocating screw injection molding machine at a cylinder temperature of 290°C and a mold temperature of 90°C to yield testing samples.

The testing samples had a good appearance and properties shown in Table 1. As seen from Table 1, the thermal resistance and mechanical strengths were well balanced.

### Comparative Example 1

Pellets were prepared in the same manner as described in Example 1 wherein PASS-1 was used alone (i.e., nylon 66 was not used) with all other conditions remaining substantially the same. The pellets were subjected to injection molding, but the flowability was too low to yield a useful shaped article.

### Comparative Example 2

Pellets were prepared in the same manner as described in Example 1 wherein nylon 66 was used alone (i.e., PASS-1 was not used) with all other conditions remaining substantially the same. The pellet was subjected to injection molding to yield a shaped article having the properties shown in Table 1. The shaped article had a low heat distortion temperature and thus a poor thermal resistance.

### Examples 4, 5 and 6

PASS-2 prepared in Referential Example 2 and polybutylene terephthalate having an intrinsic viscosity of 1,05 were dry-blended in the proportion shown in table 1. The polyblend was melt-kneaded by using the same extruder as that used in Example 1 at a cylinder temperature of 250°C and a number of revolutions of 150 rpm to yield pellets. The pellets were hot-air dried at 140°C for 3 hours and subjected to injection molding at a cylinder temperature of 250°C and a mold temperature of 90°C to prepare a testing sample.

The properties of the sample are shown in Table 1. As seen from Table 1, the resin compositions of these examples provided shaped articles having well balanced mechanical strengths and thermal resistante.

### Comparative Example 3

Pellets were prepared in the same manner as described in Example 1 wherein the same polybutylene terephthalate resin as used in Example 4 was used alone (i.e., PASS-2 was not used) with all other conditions remaining substantially the same. The pellets were injection-molded to yield a shaped article having the properties shown in Table 1. The shaped article had a low heat distortion temperature and thus a poor thermal resistance.

### Comparative Example 4

Pellets were prepared in the same manner as described in Example 1 wherein PASS-2 was used alone (i.e., the polybutylene terephthalate was not used) with all other conditions remaining substantially the same. The pellets were subjected to injection molding, but the flowability was too low to yield a shaped article.

**Table 1**

| | Ex.1 | Ex.2 | Ex.3 | Comp. Ex.2 | Ex.4 | Ex.5 | Ex.6 | Comp. Ex.3 |
|---|---|---|---|---|---|---|---|---|
| PASS | PASS-1 | PASS-1 | PASS-1 | - | PASS-2 | PASS-2 | PASS-2 | - |
| Amount (wt%) | 40 | 50 | 80 | - | 30 | 50 | 70 | - |
| Polyamide ^{*1} | - | N-66 | N-66 | N-66 | - | - | - | - |
| Amount (wt%) | 60 | 50 | 20 | 100 | - | - | - | - |
| Polyester ^{*2} | - | - | - | - | PBT | PBT | PBT | PBT |
| Amount (wt%) | - | - | - | - | 70 | 50 | 30 | 100 |
| Additive | - | - | - | - | - | - | - | - |
| Amount (wt%) | - | - | - | - | - | - | - | - |
| Tensile strength (kgf/cm²) | 820 | 700 | 850 | 800 | 650 | 600 | 750 | 600 |
| Flexural strength (kgf/cm²) | 1,200 | 1,150 | 1,250 | 1,100 | 1,000 | 1,050 | 1,200 | 900 |
| Flexural modulus (kgf/cm²) | 29,500 | 30,500 | 32,000 | 29,000 | 27,300 | 29,500 | 31,500 | 26,000 |
| Izod impact strength (kgf.cm/cm) | 3 | 2 | 2 | 5 | 2 | 2 | 2 | 3 |
| Heat distortion temperature (°C) | 150 | 185 | 193 | 80 | 140 | 170 | 186 | 60 |

| | | | | | | | | |
|---|---|---|---|---|---|---|---|---|
| *1 N-66: Poyhexamethylene adipamide | | | | | | | | |
| *2 PBT: Polybutylene terephthalate | | | | | | | | |

### Examples 7 to 12

Testing samples were prepared in the same manner as described in Example 1 wherein the PASS resins, polyamide resins, semi-aromatic polyester resins and additive shown in Table 2 were used in the amounts shown in Table 2, with all other conditions remaining substantially the same. The properties of the samples are shown in Table 2.

**Table 2**

| | Ex.7 | Ex.8 | Ex.9 | Ex.10 | Ex.11 | Ex.12 |
|---|---|---|---|---|---|---|
| PASS | PASS-1 | PASS-2 | PASS-2 | PASS-1 | PASS-1 | PASS-1 |
| Amount (wt%) | 70 | 50 | 21 | 30 | 49 | 20 |
| Polyamide ^{*1} | N-6 | N-6 | 66/6T | N-46 | - | - |
| Amount (wt%) | 30 | 50 | 49 | 70 | - | - |
| Polyester ^{*2} | - | - | - | - | PET | PCT |
| Amount (wt%) | - | - | - | - | 21 | 80 |
| Additive ^{*3} | - | - | GF | - | GF | - |
| Amount (wt%) | - | - | 30 | - | 30 | - |
| Tensile strength (kgf/cm²) | 800 | 750 | 1,300 | 840 | 1,100 | 650 |
| Flexural strength (kgf/cm²) | 1,250 | 1,100 | 2,100 | 1,350 | 1,850 | 1,100 |
| Flexural modulus (kgf/cm²) | 32,000 | 29,500 | 86,000 | 31,000 | 80,000 | 27,000 |
| Izod impact strength (kgf.cm/cm) | 4 | 3 | 9 | 5 | 7 | 2 |
| Heat distortion temperature (°C) | 186 | 180 | 280 | 160 | 195 | 155 |

| | | | | | | |
|---|---|---|---|---|---|---|
| *1 N-6: Polycapramide 66/6T: Polyhexamethylene adipamide/polyhexamethylene terephthalamide (70/30 wt%) copolymer N-46: Polytetramethylene adipamide | | | | | | |
| *2 PET: Polyethylene terephthalate PCT: Polycyclohexylenedimethylene terephthalate | | | | | | |
| *3 GF: Glass fiber | | | | | | |

### Example 13

Forty parts by weight of PASS-1 prepared in Referential Example 1, 50 parts by weight of nylon 66 having a relative vistosity of 2.7 and 10 parts by weight of an acid anhydride-modified ethylene/propylene copolymer ("N-Tafmer" MP0610 supplied by Mitsui Petrochemital Co.) were mixed together by using a V-blender. The polyblend was melt-kneaded by using a twin-screw extruder having a screw diameter of 30 mm and at a cylinder temperature of 300°C and a number of revolutions of 150 rpm to yield pellets. The pellets were vacuum-dried at 100°C for 16 hours, and injection molded by an in-line reciprocating screw injection molding machine at a cylinder temperature of 300°C and a mold temperature of 80°C to prepare testing samples.

The testing samples had a good appearance and the properties shown in Table 3. As seen from Table 3, the mechanical strengths, impact resistance and thermal resistance were well balanced and satisfactory.

### Examples 14 to 19

Testing samples were prepared in the same manner as described in Example 13 wherein the PASS resins, polyamide resins and thermoplastic elastomers shown in Table 3 were used in the amounts shown in Table 3, with all other conditions remaining substantially the same.

The testing samples had a good appearance and exhibited well balanced and satisfactory strengths, impact resistance and thermal resistance.

**Table 3**

| | Ex.13 | Ex.14 | Ex.15 | Ex.16 | Ex.17 | Ex.18 | Ex.19 |
|---|---|---|---|---|---|---|---|
| PASS | PASS-1 | PASS-1 | PASS-1 | PASS-1 | PASS-1 | PASS-2 | PASS-2 |
| Amount (wt%) | 40 | 70 | 30 | 45 | 40 | 50 | 30 |
| Polyamide ^{*1} | N-66 | N-66 | N-6 | N-6 | N-6T/6 | N-6T/66 | N-6T/66 |
| Amount (wt%) | 50 | 20 | 55 | 45 | 50 | 40 | 55 |
| Elastomer ^{*2} | E-1 | E-2 | E-3 | E-4 | E-1 | E-1 | E-5 |
| Amount (wt%) | 10 | 10 | 15 | 10 | 10 | 10 | 15 |
| Tensile strength (kgf/cm²) | 600 | 680 | 550 | 620 | 660 | 700 | 600 |
| Flexural strength (kgf/cm²) | 880 | 900 | 840 | 850 | 910 | 930 | 830 |
| Flexural modulus (kgf/cm²) | 21,000 | 22,000 | 19,000 | 20,500 | 21,000 | 21,500 | 18,500 |
| Izod impact strength (notched) (kgf.cm/cm) | 35 | 25 | 65 | 55 | 45 | 35 | 50 |
| Heat distortion temperature (°C) | 152 | 178 | 132 | 130 | 142 | 154 | 135 |

| | | | | | | | |
|---|---|---|---|---|---|---|---|
| *1 N-66: Polyhexamethylene adipamide N-6: Polycapramide (relative viscosity 2.8) N-6T/6: Polyhexamethylene terephthalamide/polycapramide (60/40 wt%) copolymer (relative viscosity 3.1) N-6T/66: Polyhexamethylene terephthalamide/polyhexamethylene adipamide (30/70 wt%) copolymer (relative viscossity 2.6) | | | | | | | |
| *2 E-1: "N-Tafmer" MP0610 supplied by Mitsui Petrochemical Co. E-2: Maleic anhydride-grafted ethylene/ethyl acrylate copolymer E-3: Ionomer "Himilan" 1706 supplied by Mitsui-Du Pont Co. E-4: "Kraton" G1941 supplied by Shell Chem. Co. E-5: Polyamide elastomer "Pebax" 4033 supplied by ATO Co. | | | | | | | |

### Example 20

Forty parts by weight of PASS-1 prepared in Reference Example 1, 40 parts by weight of polybutylene terephthalate having a relative viscosity of 1.7 and 20 parts by weight of an ethylene/glycidyl methacrylate (88/12 weight ratio) copolymer were mixed together by using a V-blender. The polyblend was melt-kneaded by using a twin-screw extruder having a screw diameter of 30 mm and at a cylinder temperature of 250°C and a number of revolutions of 200 rpm to yield pellets. The pellets were dried in hot air at 140°C for 3 hours, and injection molded by an injection molding machine at a cylinder temperature of 260°C and a mold temperature of 80°C to prepare testing samples.

The testing samples had a good appearance and the properties shown in table 4. The mechanical strengths, impact resistance and thermal resistance were well balanced and satisfactory.

### Examples 21 to 26

Testing samples were prepared in the same manner as dscribed in Example 20 wherein the PASS resins, semi-aromatic polyester resins and thermoplastic elastomers shown in Table 4 were used in the amounts shown in table 4, with all other conditions remaining substantially the same.

These testing samples had a good appearance and exhibited well balanced and satisfactory shapability, mechanical strengths, impact resistance and thermal resistance.

**Table 4**

| | Ex.20 | Ex.21 | Ex.22 | Ex.23 | Ex.24 | Ex.25 | Ex.26 |
|---|---|---|---|---|---|---|---|
| PASS | PASS-1 | PASS-1 | PASS-1 | PASS-1 | PASS-1 | PASS-2 | PASS-2 |
| Amount (wt%) | 40 | 30 | 60 | 40 | 50 | 40 | 30 |
| Polyester *1 | PBT | PBT | PBT | PET | PCT | PET | PCT |
| Amount (wt%) | 40 | 55 | 30 | 45 | 30 | 40 | 50 |
| Elastomer *2 | E-1 | E-1 | E-1 | E-2 | E-3 | E-4 | E-5 |
| Amount (wt%) | 20 | 15 | 10 | 15 | 20 | 20 | 20 |
| Kneading & molding temperature (°C) | 250 | 250 | 250 | 280 | 300 | 280 | 300 |
| Tensile strength (kgf/cm²) | 440 | 500 | 620 | 450 | 540 | 410 | 420 |
| Flexural strength (kgf/cm²) | 700 | 780 | 800 | 730 | 760 | 650 | 700 |
| Flexural modulus (kgf/cm²) | 19,000 | 20,500 | 22,000 | 20,000 | 19,500 | 18,500 | 20,500 |
| Izod impact strength (notched) (kgf.cm²) | 50 | 35 | 20 | 40 | 35 | 45 | 55 |
| Heat distortion temperature (°C) | 125 | 120 | 150 | 130 | 143 | 128 | 130 |

| | | | | | | | |
|---|---|---|---|---|---|---|---|
| *1 PBT: Polybutylene terephthalate PET: Polyethylene terephthalate PCT: Polycyclohexylenedimethylene terephthalate | | | | | | | |
| *2 E-1: Ethylene/glycidyl methacrylate (88/12 wt%) copolymer E-2: Ethylene/glycidyl methacrylate (90/10 wt%) copolymer E-3: Glycidyl methacrylate-grafted ethylene/ethyl acrylate copolymer E-4: Glycidyl methacrylate-grafted styrene/ethylene.butylene/styrene copolymer E-5 Maleic anhydride-grafted ethylene/ethyl acrylate copolymer | | | | | | | |

## Claims

1. A resin composition comprising a poly(arylene sulfide sulfone) resin and at least one crystalline thermoplastic resin selected from polyamide resins and semi-aromatic polyester resins; the amounts of the poly(arylene sulfide sulfone) resin and the crystalline thermoplastic resin being 95 to 5% by weight and 5 to 95% by weight, respectively, based on the total weight of the poly(arylene sulfide sulfone) and the thermoplastic resins.

2. The resin composition according to claim 1, wherein the poly(arylene sulfide sulfone) resin is a poly(phenylene sulfide sulfone) resin.

3. The resin composition according to claim 1 or 2, wherein the poly(arylene sulfide sulfone) resin is a substantially non-crystalline poly(phenylene sulfide sulfone) resin comprising recurring units represented by the following formula (I): 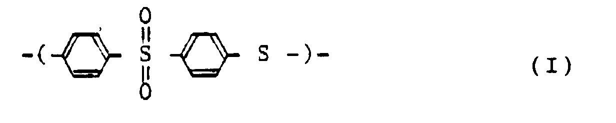 and which exhibits a heat of crystalline fusion not larger than 2 cal/g as measured at a temperature elevation rate of 20°C/min by using a differential scanning calorimeter.

4. The resin composition according to any preceding claim, wherein the polyamide resin is an aliphatic polyamide resin or a semi-aromatic polyamide resin.

5. The resin composition according to any of claims 1 to 3, wherein the polyamide resin is at least one resin selected from polycapramide, polyhexamethylene adipamide, polytetramethylene adipamide, polyhexamethylene sebacamide, polyhexamethylene dodecamide, polyundecamethylene adipamide, polyundecane amide, polydodecane amide, a polycapramide/polyhexamethylene terephthalamide copolymer and a polyhexamethylene adipamide/polyhexamethylene terephthalamide copolymer.

6. The resin composition according to any of claims 1 to 3, wherein the semi-aromatic polyester resin is at least one polyester resin selected from polyethylene terephthalate, polybutylene terephthalate and polycyclohexylenedimethylene terephthalate.

7. The resin composition according to any preceding claim, wherein the amount of the poly(arylene sulfide sulfone) resin is 85 to 15% by weight based on the total weight of the poly(arylene sulfide sulfone) resin and the thermoplastic resin.

8. The resin composition according to claim 7, wherein the amount of the poly(arylene sulfide sulfone), resin is 80 to 20% by weight based on the total weight of the poly(arylene sulfide sulfone) resin and the thermoplastic resin.

9. The resin composition according to any preceding claim, wherein the resin composition further comprises a reinforcing material.

10. The resin composition according to claim 9, wherein the amount of the reinforcing material is not larger than 400 parts by weight per 100 parts by weight of the total resins in the resin composition.

11. The resin composition according to any preceding claim, wherein the resin composition further comprises, as an impact modifier, a thermoplastic elastomer selected from a polyolefin elastomer, a modified polyolefin elastomer, a diene elastomer, a hydrogenated product derived from a diene elastomer, an acrylic elastomer, a silicone elastomer, a fluorine-containing elastomer, and a polysulfide elastomer.

12. The resin composition according to claim 11, wherein the thermoplastic elastomer is at least one elastomer selected from a polyolefin elastomer, a modified polyolefin elastomer, a diene elastomer and a hydrogenated product derived therefrom.

13. The resin composition according to claim 12, wherein the said at least one thermoplastic elastomer is (a) a modified polyolefin elastomer having, in the molecule, functional groups which are selected from carboxylic acid groups, groups derived from carboxylic acid groups and epoxy groups or (b) a diene elastomer which is an A-B type or A-B-A' type diene block copolymer elastomer or a hydrogenated product derived therefrom.

14. The resin composition according to any of claims 11 to 13, wherein the crystalline thermoplastic resin is a polyamide resin and the amount of the thermoplastic elastomer is 5 to 100 parts by weight per 100 parts by weight of the total of the poly(arylene sulfide sulfone) resin and the polyamide resin.

15. The resin composition according to any of claims 11 to 13, wherein the crystalline thermoplastic resin is a semi-aromatic polyester resin and the amount of the thermoplastic elastomer is 5 to 100 parts by weight per 100 parts by weight of the total of the poly(arylene sulfide sulfone) resin and the semi-aromatic polyester resin.

## Patentansprüche

1. Harzmasse, die ein Poly(arylensulfidsulfon)-Harz und mindestens ein kristallines thermoplastisches Harz umfaßt, das aus Polyamidharzen und halbaromatischen Polyesterharzen ausgewählt ist; wobei die Mengen an Poly(arylensulfidsulfon)-Harz und dem kristallinen thermoplastischen Harz auf der Basis des Gesamtgewichtes des Poly(arylensulfidsulfon)- und des thermoplastischen Harzes 95 - 5 Gew.-% bzw. 5 - 95 Gew.-% betragen.

2. Harzmasse nach Anspruch 1, wobei das Poly(arylensulfidsulfon)-Harz Poly(phenylensulfidsulfon)-Harz ist.

3. Harzmasse nach Anspruch 1 oder 2, wobei das Poly(arylensulfidsulfon)-Harz ein im wesentlichen nicht kristallines Poly(phenylensulfidsulfon)-Harz ist, das sich wiederholende Einheiten der folgenden Formel (I) umfaßt: 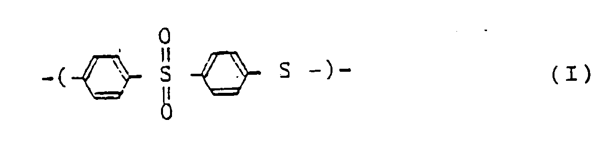 und eine Kristallschmelzwärme von nicht mehr als 2 cal/g aufweist, die bei einer Temperaturerhöhungsrate von 20°C/min mit einem Kalorimeter mit Differentialabtastung gemessen wird.

4. Harzmasse nach einem der vorstehenden Ansprüche, wobei das Polyamidharz ein aliphatisches Polyamidharz oder ein halbaromatisches Polyamidharz ist.

5. Harzzusammensetzung nach einem der Ansprüche 1 bis 3, wobei das Polyamidharz mindestens ein Harz ist, das aus Polycapramid, Polyhexamethylenadipamid, Polytetramethylenadipamid, Polyhexamethylensebacamid, Polyhexamethylendodecamid, Polyundecamethylenadipamid, Polyundecanamid, Polydodecanamid, einem Copolymer von Polycapramid/Polyhexamethylenterephthalamid und einem Copolymer von Polyhexamethylenadipamid/Polyhexamethylenterephthalamid ausgewählt ist.

6. Harzmasse nach einem der Ansprüche 1 bis 3, wobei das halbaromatische Polyesterharz mindestens ein Polyesterharz ist, das aus Polyethylenterephthalat, Polybutylenterephthalat und Polycyclohexylendimethylenterephthalat ausgewählt ist.

7. Harzmasse nach einem der vorstehenden Ansprüche, wobei die Menge des Poly(arylensulfidsulfon)-Harzes auf der Basis des Gesamtgewichtes des Poly(arylensulfidsulfon) -Harzes und des thermoplastischen Harzes 85 - 15 Gew.-% beträgt.

8. Harzmasse nach Anspruch 7, wobei die Menge des Poly(arylensulfidsulfon)-Harzes auf der Basis des Gesamtgewichtes des Poly(arylensulfidsulfon)-Harzes und des thermoplastischen Harzes 80 - 20 Gew.-% beträgt.

9. Harzmasse nach einem der vorstehenden Ansprüche, wobei die Harzmasse außerdem ein Verstärkungsmaterial umfaßt.

10. Harzmasse nach Anspruch 9, wobei die Menge des Verstärkungsmaterials nicht mehr als 400 Gewichtsteile pro 100 Gewichtsteile der gesamten Harze in der Harzmasse beträgt.

11. Harzmasse nach einem der vorstehenden Ansprüche, wobei die Harzmasse außerdem als schlagzähmachender Zusatzstoff ein thermoplastisches Elastomer umfaßt, das aus einem Polyolefin-Elastomer, einem modifizierten Polyolefin-Elastomer, einem Dien-Elastomer, einem von einem Dien-Elastomer stammenden hydrierten Produkt, einem Acryl-Elastomer, einem Silicon-Elastomer, einem fluorhaltigen Elastomer und einem Polysulfid-Elastomer ausgewählt ist.

12. Harzmasse nach Anspruch 11, wobei das thermoplastische Elastomer mindestens ein Elastomer ist, das aus einem Polyolefin-Elastomer, einem modifizierten Polyolefin-Elastomer, einem Dien-Elastomer und einem davon stammenden hydrierten Produkt ausgewählt ist.

13. Harzmasse nach Anspruch 12, wobei das zumindest eine thermoplastische Elastomer (a) ein modifiziertes Polyolefin-Elastomer, das im Molekül funktionelle Gruppen aufweist, die aus Carbonsäuregruppen, von Carbonsäuregruppen stammenden Gruppen und Epoxygruppen ausgewählt sind, oder (b) ein Dien-Elastomer, das ein Dien-Blockcopolymer-Elastomer vom Typ A-B oder vom Typ A-B-A' ist, oder ein davon stammendes hydriertes Produkt ist.

14. Harzmasse nach einem der Ansprüche 11 bis 13, wobei das kristalline thermoplastische Harz ein Polyamidharz ist, und die Menge des thermoplastischen Elastomers 5 - 100 Gewichtsteile pro 100 Gewichtsteile des Poly(arylensulfidsulfon)-Harzes und des Polyamidharzes zusammen beträgt.

15. Harzmasse nach einem der Ansrpüche 11 bis 13, wobei das kristalline thermoplastische Harz ein halbaromatisches Polyesterharz ist, und die Menge des thermoplastischen Elastomers 5 - 100 Gewichtsteile pro 100 Gewichtsteile des Poly(arylensulfidsulfon)-Harzes und des halbaromatischen Polyesterharzes zusammen beträgt.

## Revendications

1. Une composition de résine comprenant une résine de poly(sulfure d'arylène-sulfone) et au moins une résine thermoplastique cristalline choisie parmi les résines polyamides et les résines polyesters semi-aromatiques ; les quantités de la résine de poly(sulfure d'arylène-sulfone) et de la résine thermoplastique cristalline étant respectivement de 95 à 5 % en poids et de 5 à 95 % en poids, par rapport au poids total de la résine de poly(sulfure d'arylène-sulfone) et de la résine thermoplastique.

2. La composition de résine selon la revendication 1, dans laquelle la résine de poly(sulfure d'arylène-sulfone) est une résine de poly(sulfure de phénylène-sulfone).

3. La composition de résine selon la revendication 1 ou 2, dans laquelle la résine de poly(sulfure d'arylène-sulfone) est une résine de poly(sulfure de phénylène-sulfone) sensiblement non cristalline comprenant des motifs récurrents représentés par la formule (I) suivante : 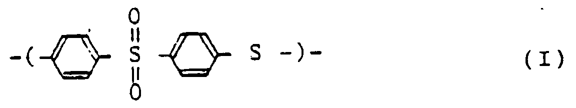 et présentant une chaleur de fusion cristalline d'au plus 2 cal/g, comme mesurée à une vitesse d'élévation de température de 20°C/min en utilisant un calorimètre différentiel à balayage.

4. La composition de résine selon l'une quelconque des revendications précédente, dans laquelle la résine polyamide est une résine polyamide aliphatique ou une résine polyamide semi-aromatique.

5. La composition de résine selon l'une quelconque des revendications 1 à 3, dans laquelle la résine polyamide est au moins une résine choisie parmi le polycapramide, le polyhexaméthylène-adipamide, le polytétraméthylène-adipamide, le polyhexaméthylène-sébacamide, le polyhexaméthylène-dodécamide, le polyundécaméthylène-adipamide, le polyundécanamide, le polydodécanamide, un copolymère polycapramide/polyhexaméthylène-téréphtalamide et un copolymère polyhexaméthylène-adipamide/polyhexaméthylène-téréphtalamide.

6. La composition de résine selon l'une quelconque des revendications 1 à 3, dans laquelle la résine polyester semi-aromatique est au moins une résine polyester choisie parmi le polytéréphtalate d'éthylène, le polytéréphtalate de butylène et le polytéréphtalate de cyclohexylènediméthylène.

7. La composition de résine selon l'une quelconque des revendications précédentes, dans laquelle la quantité de résine de poly(sulfure d'arylène-sulfone) est de 85 à 15 % en poids par rapport au poids total de la résine de poly(sulfure d'arylène-sulfone) et de la résine thermoplastique.

8. La composition de résine selon la revendication 7, dans laquelle la quantité de résine de poly(sulfure d'arylène-sulfone) est de 80 à 20 % en poids par rapport au poids total de la résine de poly(sulfure d'arylène-sulfone) et de la résine thermoplastique.

9. La composition de résine selon l'une quelconque des revendications précédentes, dans laquelle la composition de résine contient, de plus, une matière de renforcement.

10. La composition de résine selon la revendication 9, dans laquelle la quantité de matière de renforcement n'est pas supérieure à 400 parties en poids pour 100 parties en poids des résines totales de la composition de résine.

11. La composition de résine selon l'une quelconque des revendications précédentes, dans laquelle la composition de résine contient de plus, comme modificateur de résistance au choc, un élastomère thermoplastique choisi parmi un élastomère polyoléfinique, un élastomère polyoléfinique modifié, un élastomère de diène, un produit hydrogéné dérivé d'un élastomère de diène, un élastomère acrylique, un élastomère de silicone, un élastomère fluoré et un élastomère de polysulfure.

12. La composition de résine selon la revendication 11, dans laquelle l'élastomère thermoplastique est au moins un élastomère choisi parmi un élastomère polyoléfinique, un élastomère polyoléfinique modifié, un élastomère de diène et un produit hydrogéné dérivé de celui-ci.

13. La composition de résine selon la revendication 12, dans laquelle ledit élastomère thermoplastique est (a) un élastomère polyoléfinique modifié dont la molécule contient des groupes fonctionnels qui sont choisis parmi des groupes acide carboxylique, des groupes dérivés de groupes acide carboxylique et des groupes époxy, ou (b) un élastomère de diène qui est un élastomère de copolymère séquencé de diène du type A-B ou du type A-B-A' ou un produit hydrogéné dérivé de celui-ci.

14. La composition de résine selon l'une quelconque des revendications 11 à 13, dans laquelle la résine thermoplastique cristalline est une résine polyamide et la quantité de l'élastomère thermoplastique est de 5 à 100 parties en poids pour 100 parties en poids du total de la résine de poly(sulfure d'arylène-sulfone) et de la résine polyamide.

15. La composition de résine selon l'une quelconque des revendications 11 à 13, dans laquelle la résine thermoplastique cristalline est une résine polyester semi-aromatique et la quantité de l'élastomère thermoplastique est de 5 à 100 parties en poids pour 100 parties en poids du total de la résine de poly(sulfure d'arylène-sulfone) et de la résine polyester semi-aromatique.
